# EUROPEAN PATENT APPLICATION

(11) **EP 4 528 592 A1**
(43) Date of publication of application: **26.03.2025**
(21) Application number: 24764117.8
(22) Date of filing: 20.02.2024
(51) Int. Cl.: G06N 3/063, G06N 3/04, G06N 3/0464, G06N 3/045, G06N 3/08, G06F 17/15

(54) **COMPLEMENTARY DEEP NEURAL NETWORK ACCELERATOR HAVING HETEROGENEOUS CONVOLUTIONAL NEURAL NETWORK AND SPIKING NEURAL NETWORK CORE ARCHITECTURE**

(30) Priority: 28.02.2023 KR 20230027163
(71) Applicant: Korea Advanced Institute of Science and Technology, Guseong-dong, Yuseong-gu Daejeon 34141 (KR)
(72) Inventor: YOO, Hoi Jun, Daejeon 34141 (KR); KIM, Sang Yeob, Daejeon 34141 (KR)
(74) Representative: AWA Sweden AB
(86) International application number: PCT/KR2024/002179
(87) International publication number: WO 2024/181717

(57) **Abstract**

A complementary deep neural network accelerator having a heterogeneous convolutional neural network and spiking neural network core architecture according to the present invention comprises: an accumulator array spiking neural network processing module that accumulates weights of synapses during spike generation and generates voltages of neurons; a multiplier-accumulator array convolutional neural network processing module that accumulates the products of inputs and weights of a neural network and generates output values of neurons; a highest RISC controller responsible for controlling the spiking neural network processing module and the convolutional neural network processing module, and processing an activation function and batch normalization; an attention module that performs channel-by-channel pooling of the inputs and then performs convolution using pre-trained weights to generate an attention map; and a neural network operation allocator that divides the inputs into multiple tiles, calculates the frequency of spikes generated in each tile to predict a neural network processing module with low energy consumption, and transfers the tiles to the corresponding neural network processing modules to enable operations to be performed. Therefore, the complementary deep neural network accelerator has the effect that energy efficiency can be increased while maintaining the inference accuracy and training accuracy of the deep neural network accelerator through the complementation of the spiking neural network and the convolutional neural network.

## Description

### [Technical Field]

The present invention relates to a complementary deep neural network accelerator having a heterogeneous convolutional neural network and a spiking neural network core architecture, and more particularly to a complementary deep neural network accelerator having a heterogeneous convolutional neural network and a spiking neural network core architecture capable of improving energy efficiency in deep neural network inference and a training process by designing an accelerator that processes a deep neural network by mixing and utilizing a convolutional neural network and a spiking neural network instead of an accelerator that only processes a convolutional neural network, thereby replacing a multiplier and an accumulator used in a conventional operation with a low-power accumulator.

In addition, the present invention relates to a complementary deep neural network accelerator having a heterogeneous convolutional neural network and a spiking neural network core architecture, and more particularly to a complementary deep neural network accelerator having a heterogeneous convolutional neural network and a spiking neural network core architecture capable of achieving optimal energy efficiency during inference by using different types of neural networks depending on the spike frequency between neural network layers or within a neural network layer, capable of achieving lower power and high accuracy during training by predicting a weight to be learned with lower power through a spiking neural network and performing high-accuracy training only for a weight required to be learned through a convolutional neural network, and capable of achieving high energy efficiency by lowering power used to predict a weight required to be learned through a spiking neural network using a new spiking neural network algorithm and architecture.

### [Background Art]

Recently, a spiking neural network may achieve the same accuracy as that of a convolutional neural network using an algorithm of conversion from the convolutional neural network into the spiking neural network (CNN-to-SNN).

In addition, the spiking neural network has high sparsity through a spike-based event-driven operation unlike a frame-driven operation of the convolutional neural network, and thus becoming a promising choice for ultra-low-power artificial intelligence (AI) applications.

However, the number of operations in the spiking neural network varies depending on the spike sparsity varying for each layer, and accordingly, unlike convolution operations, energy consumption of an operator in each layer significantly varies, and a type of efficient neural network varies for each layer.

In addition, the spiking neural network may achieve lower-power training by generating a forward gradient calculated as a time difference between a pre-synaptic spike and a post-synaptic spike similarly to an STDP learning algorithm of a biological neuron.

However, accuracy of the corresponding training method is lower than that of the convolutional neural network. On the other hand, the convolutional neural network has problems in that a lot of calculation is required due to repeated back-propagation and gradient generation even though high accuracy may be obtained through back-propagation training, and thus low-power training is difficult.

In addition, each of conventional art documents [1] and [2] below has a structure capable of performing efficient acceleration for only one type of neural network, and thus has a problem in that achievement of high energy efficiency is significantly difficult in a process of processing other neural networks.

In addition, conventional art document [3] that processes two types of neural networks using a proposed homogeneous architecture has a problem in that achievement of high energy efficiency is significantly difficult in a homogeneous core since the two neural networks have different operation methods and memory access patterns.

Furthermore, conventional art document [3] has problems in that the two types of neural networks cannot be utilized together to achieve higher energy efficiency and a deep neural network cannot be trained.

Therefore, a heterogeneous accelerator capable of processing a complementary deep neural network is required to energy-efficiently process inference and training of deep neural networks.

### [Conventional Art Documents]

### [Non-Patent Document]

(Non-Patent Document 1) [1] K. Hirose et al., "Hiddenite: 4K-PE Hidden Network Inference 4D-Tensor Engine Exploiting On-Chip Model Construction Achieving 34.8-to-16.0TOPS/W for CIFAR-100 and ImageNet," 2022 IEEE International Solid- State Circuits Conference (ISSCC), 2022, pp. 1-3
(Non-Patent Document 2) [2] Chen, Gregory K., et al. "A 4096-neuron 1M-synapse 3.8-pJ/SOP spiking neural network with on-chip STDP learning and sparse weights in 10-nm FinFET CMOS." IEEE Journal of Solid-State Circuits 54.4 (2018): 992-1002.
(Non-Patent Document 3) [3] L. Deng et al., "Tianjic: A Unified and Scalable Chip Bridging Spike-Based and Continuous Neural Computation," in IEEE Journal of Solid-State Circuits, vol. 55, no. 8, pp. 2228-2246, Aug. 2020

### [Disclosure]

### [Technical Problem]

To solve the above-mentioned problems, an object of the present invention is to provide a complementary deep neural network accelerator having a heterogeneous convolutional neural network and a spiking neural network core architecture capable of performing energy-efficient inference and training with high accuracy using a complementary deep neural network combining a convolutional neural network and a spiking neural network.

In addition, to solve the above-mentioned problems, an object of the present invention is to provide a complementary deep neural network accelerator having a heterogeneous convolutional neural network and a spiking neural network core architecture for not only reducing power required to process a complementary deep neural network but also reducing energy consumption in a process of singly processing each neural network by proposing a method of determining a mixing method of two neural networks and optimizing this method.

### [Technical Solution]

A complementary deep neural network accelerator having a heterogeneous convolutional neural network and a spiking neural network core architecture according to the present invention for achieving the above-mentioned objects includes a spiking neural network processing module in an accumulator array configured to generate a voltage of a neuron by accumulating a weight of a synapse when a spike is generated, a multiplier/accumulator array convolutional neural network processing module configured to accumulate a product of input and a weight of a neural network and generate an output value of the neuron, a top-level RISC controller responsible for controlling the spiking neural network processing module and the convolutional neural network processing module, and processing an activation function and batch normalization, an attention module configured to perform channel-wise pooling on the input, and then perform convolution using a pre-trained weight to generate an attention map, and a neural network operation allocator configured to divide the input into several tiles, calculate a frequency of a spike generated for each tile to estimate a neural network processing module consuming less energy, and transfer a tile to the neural network processing module to allow an operation to be performed.

In addition, the complementary deep neural network accelerator having the heterogeneous convolutional neural network and the spiking neural network core architecture according to the present invention for achieving the above-mentioned objects further includes a global L2 cache configured to store a weight required for a neural network operation and transfer a weight required for a convolutional neural network core of the spiking neural network processing module or a spiking neural network core of the convolutional neural network processing module, and a sparsity generator configured to obtain a forward gradient average value of a synapse connected to the neuron and cause a convolutional neural network PE of the convolutional neural network processing module to skip error backpropagation for the neuron when the average value is less than a threshold value.

In addition, in the complementary deep neural network accelerator having the heterogeneous convolutional neural network and the spiking neural network core architecture according to the present invention for achieving the above-mentioned objects, the spiking neural network processing module may include a plurality of spiking neural network clusters each including a plurality of spiking neural network cores and be assigned a spiking operation to perform the spiking operation.

In addition, the complementary deep neural network accelerator having the heterogeneous convolutional neural network and the spiking neural network core architecture according to the present invention for achieving the above-mentioned objects may include a spike encoder including a multiplexer and a counter and configured to receive data from an input memory and convert the input data into a spike pattern, a linear-feedback shift register (LFSR) including a register and XOR logics and configured to generate a random value to determine a start point of a spike pattern when the spike encoder operates, a local gradient unit including a subtractor and a lookup table and configured to obtain a time difference between an output spike and an input spike and convert the time difference into a gradient, a spiking neural network PE including an inference logic configured to calculate a neuron potential by accumulating a weight when a spike is input from the spike encoder and a gradient accumulation logic configured to receive a gradient from the local gradient unit and accumulate the gradient, an adder tree & firing logic configured to vertically accumulate operation results of spiking neural network PEs to generate neuron voltages and generate an output spike when a threshold value is exceeded, and a global counter used to simultaneously obtain time differences between input spikes and output spikes.

In addition, in the complementary deep neural network accelerator having the heterogeneous convolutional neural network and the spiking neural network core architecture according to the present invention for achieving the above-mentioned objects, L1 caches may be integrated, and the spiking neural network PE may import a weight for a pre-synaptic neuron from the global L2 cache to an L1 cache consuming low read operation power, and reuse a weight stored in the L1 cache for operations of the same pre-synaptic neurons without accessing the global L2 cache after one time step.

In addition, in the complementary deep neural network accelerator having the heterogeneous convolutional neural network and the spiking neural network core architecture according to the present invention for achieving the above-mentioned objects, the convolutional neural network processing module may include a plurality of convolutional neural network clusters each including a plurality of convolutional neural network cores and be assigned a convolution operation to perform the convolution operation.

In addition, in the complementary deep neural network accelerator having the heterogeneous convolutional neural network and the spiking neural network core architecture according to the present invention for achieving the above-mentioned objects, each of the convolutional neural network cores may include a convolutional neural network PE including a multiplier/accumulator and a sparsity processor, and configured to perform a convolution operation required in a complementary deep neural network during inference, and to skip backpropagation for an unnecessary weight and calculate a gradient exclusively for a weight required to be learned during training, an input memory configured to store input data used in an operation of a convolutional neural network, an input loader configured to load input data required for each cycle in the convolutional neural network PE, a weight memory configured to store weight data used in an operation of the convolutional neural network, a weight loader configured to load weight data required for each cycle in the convolutional neural network PE, a multiplier/accumulator configured to perform a convolution operation by obtaining a product of a received weight and input and accumulating the product with a previously calculated result, and an operation skip controller configured to control the input load and the weight loader so that propagation for an unnecessary weight is skipped and a gradient is allowed to be calculated for a weight required to be learned during training.

In addition, in the complementary deep neural network accelerator having the heterogeneous convolutional neural network and the spiking neural network core architecture according to the present invention for achieving the above-mentioned objects, the attention module may include a maximum pooling unit configured to fine a largest value in data of a plurality of input channels present in each pixel direction for input, and eliminate other values except for the corresponding value from the input channels, thereby reducing a size of the input channels, an average pooling unit configured to find an average value in data of a plurality of input channels present in each pixel direction for input, and eliminate other values except for the corresponding value from the input channels, thereby reducing a size of the input channels, a multiplier & accumulator configured to perform a convolution operation by performing multiplication of a weight and input and accumulating a resultant value with a previous result value using a multiplier and an accumulator, and a multiplier configured to receive a weight and input, perform multiplication, and transfer a result value to the accumulator.

### [Advantageous effects]

A complementary deep neural network accelerator having a heterogeneous convolutional neural network and a spiking neural network core architecture according to the present invention has an effect of being able to increase energy efficiency while maintaining accuracy of inference and training of the deep neural network accelerator through mutual complementation of a spiking neural network and a convolutional neural network.

In addition, a complementary deep neural network accelerator having a heterogeneous convolutional neural network and a spiking neural network core architecture according to the present invention has effects in that, in the case of ImageNet classification, energy efficiency increases by 16.7% and 43.3%, respectively, compared to using only a convolutional neural network or a spiking neural network due to a neural network operation allocator when performing inference of a deep neural network, and energy efficiency may be increased by up to 85.8% and 51.4%, respectively, when a process of allocating neural network operations is optimized additionally using an integrated attention unit.

In addition, a complementary deep neural network accelerator having a heterogeneous convolutional neural network and a spiking neural network core architecture according to the present invention has effects in that, a spiking neural network core having integrated distributed L1 caches eliminates repetitive memory access, so that a weight reuse rate may be increased by 3.3 to 5.5 times depending on the network type, and power consumed for processing a spiking neural network may be reduced by 42.2 to 49.1%.

In addition, a complementary deep neural network accelerator having a heterogeneous convolutional neural network and a spiking neural network core architecture according to the present invention has effects in that a forward gradient-based sparsity generator and a sparsity-processing convolution operator may reduce the amount of operation required for backpropagation and gradient generation by 58% and 79%, respectively, in a deep neural network training process on a CIFAR-10 dataset, and may reduce the amount of operation required for backpropagation and gradient generation by 31% and 43%, respectively, in a training process on an ImageNet dataset.

In addition, a complementary deep neural network accelerator having a heterogeneous convolutional neural network and a spiking neural network core architecture according to the present invention has effects in that a global counter and a local gradient unit may reduce power consumption by about 61% when inference and forward gradient generation of a spiking neural network are performed at the same time, and increase training energy efficiency by 61.6% and 28.7% for CIFAR-10 and an ImageNet dataset, respectively, by operating together with a forward gradient-based sparsity generator and a sparsity processing convolution core.

In addition, a complementary deep neural network accelerator having a heterogeneous convolutional neural network and a spiking neural network core architecture according to the present invention has effects in that a complementary deep neural network accelerator may obtain accuracy of 94.1% for inference on CIFAR-10 and achieve accuracy of 77.1% for inference on Image Net.

### [Description of Drawings]

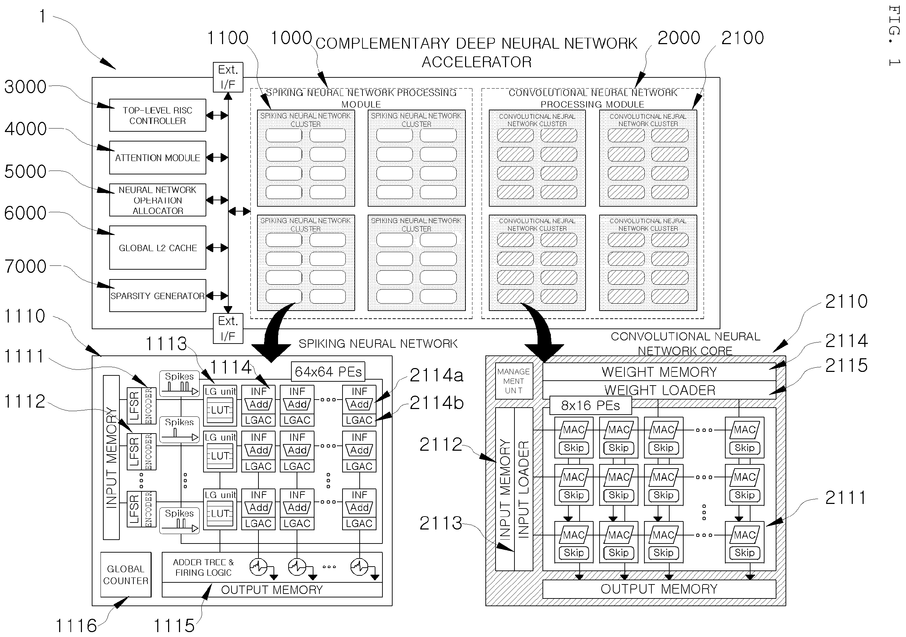

FIG. 1 is a configuration diagram of a complementary deep neural network accelerator having a heterogeneous convolutional neural network and a spiking neural network core architecture according to the present invention;

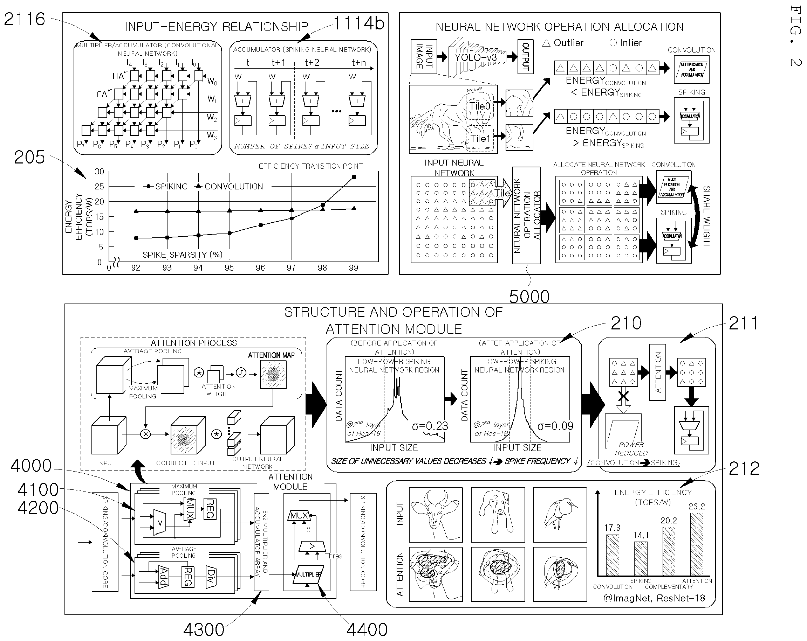

FIG. 2 is a diagram for describing an example operation of an operation allocator and an example structure and an example operation of an attention module for energy-efficient acceleration of a complementary deep neural network by the complementary deep neural network accelerator having the heterogeneous convolutional neural network and the spiking neural network core architecture according to the present invention;

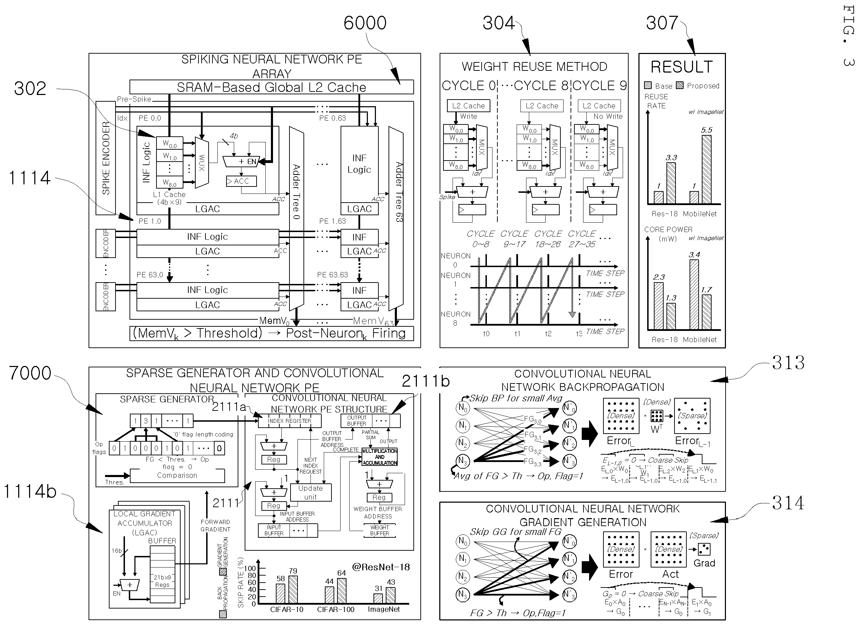

FIG. 3 is a diagram illustrating an example structure of a spiking neural network PE array architecture having a distributed L1 cache and an accumulator-based inference logic for spiking neural network operation processing of the complementary deep neural network accelerator having the heterogeneous convolutional neural network and the spiking neural network core architecture according to the present invention, an example operation of weight reuse resulting therefrom, an example operation of forward gradient-based sparsity generation for energy-efficient deep neural network training, and an example structure of an operation forward gradient-based sparsity generator and an convolutional neural network PE architecture;

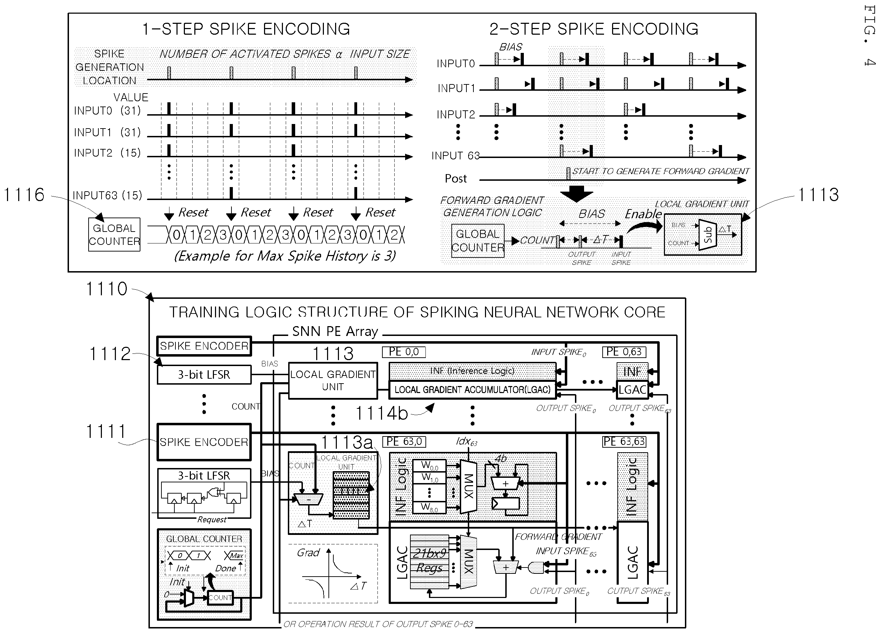

FIG. 4 is a diagram illustrating a structure of a spiking neural network core and a 2-step spike encoding processor by a spike encore of the complementary deep neural network accelerator having the heterogeneous convolutional neural network and the spiking neural network core architecture according to the present invention; and

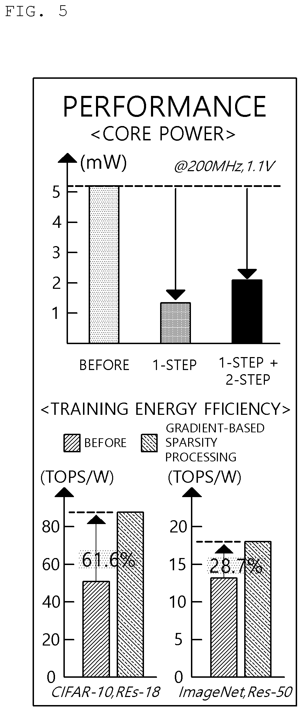

FIG. 5 is a performance graph diagram of the complementary deep neural network accelerator having the heterogeneous convolutional neural network and the spiking neural network core architecture according to the present invention.

### [Best Mode]

Terms or words used in this specification and claims should not be interpreted as limited to usual or dictionary meanings, but should be interpreted as having meanings and concepts that conform to the technical idea of the present invention, based on the principle that the inventor may appropriately define the concept of a term to best describe the invention.

Therefore, the embodiments described in this specification and the configurations illustrated in the drawings are only the most preferred embodiments of the present invention and do not represent all of the technical ideas of the present invention. Therefore, it should be understood that there may be various equivalents and modified examples that may replace the embodiments at the time of filing this application.

Hereinafter, a complementary deep neural network accelerator having a heterogeneous convolutional neural network and a spiking neural network core architecture according to the present invention will be described in detail with reference to the attached drawings.

FIG. 1 is a configuration diagram of the complementary deep neural network accelerator having the heterogeneous convolutional neural network and the spiking neural network core architecture according to the present invention.

As illustrated in FIG. 1, the complementary deep neural network accelerator 1 having the heterogeneous convolutional neural network and the spiking neural network core architecture according to the present invention includes a spiking neural network processing module 1000, a convolutional neural network processing module 2000, a top-level RISC controller 3000, an attention module 4000, a neural network operation allocator 5000, a global L2 cache 6000, and a forward gradient-based sparsity generator 7000.

The spiking neural network processing module 1000 includes a plurality of spiking neural network clusters 1100, and each of the spiking neural network clusters 1100 includes a plurality of spiking neural network cores 1110.

More specifically, the spiking neural network processing module 1000 includes four spiking neural network clusters 1100, and each of the spiking neural network clusters 1100 includes eight spiking neural network cores 1110 that are assigned and performs spiking operations required for the complementary deep neural network.

The spiking neural network core 1110 performs a spiking neural network operation required in the complementary deep neural network.

In addition, the spiking neural network core 1110 includes 64×64 spiking neural network PEs 1114, and each operator includes an accumulator and performs a neuron operation by accumulating a weight when a spike is input.

In detail, the spiking neural network core 1110 includes a spike encoder 1111, a linear-feedback shift register (LFSR) 1112, a local gradient unit 1113, a spiking neural network PE 1114, an adder tree & firing logic 1115, and a global counter 1116, the spiking neural network PE 1114 includes an accumulator-based inference unit 1114a and a local gradient accumulator 1114b, and the plurality of spiking neural network PEs 1114 is grouped to support high bit precision for a task requiring a high-complexity neural network.

The spike encoder 1111 includes a multiplexer and a counter, receives data delivered from an input memory, and converts the input data into a spike pattern, and converted spikes are sequentially transmitted to the spiking neural network PE 1114.

The LFSR 1112 includes a register and XOR logics and generates a random value to determine a start point of a spike pattern when the spike encoder 1111 operates.

The local gradient unit 1113 includes a subtractor and a lookup table, obtains a time difference between an output spike and an input spike, converts the time difference into a gradient, and transmits the gradient to each spiking neural network PE 1114.

The spiking neural network PE 1114 includes an inference logic and a gradient accumulation logic, each logic includes a register file, a multiplexer, and an accumulator, the inference logic calculates a neuron potential by accumulating a weight when a spike is input, and the gradient accumulation logic receives a gradient from the local gradient unit and accumulates the gradient.

The adder tree & firing logic 1115 vertically accumulates operation results of the spiking neural network PEs 1114 to generate neuron voltages, and generates an output spike when a threshold value is exceeded.

The global counter 1116 is configured as a counter and is used to simultaneously obtain time differences between several input spikes and output spikes.

The convolutional neural network processing module 2000 includes a plurality of convolutional neural network clusters 2100, and each of the convolutional neural network clusters 2100 includes a plurality of convolutional neural network cores 2110.

More specifically, the convolutional neural network processing module 2000 includes four convolutional neural network clusters 2100, and each convolutional neural network cluster includes eight convolutional neural network cores 2110 to allocate and process convolution operations required for the complementary deep neural network.

The convolutional neural network cores 2110 each include 8×16 convolutional neural network PEs 2111, an input memory 2112, an input loader 2113, a weight memory 2114, and a weight loader 2115, and the convolutional neural network PEs 2111 include a multiplier/accumulator 2116 and an operation skip controller, so that high precision may be supported through a combination of the plurality of convolutional neural network PEs 2111.

The convolutional neural network PE 2111 includes a multiplier/accumulator and a sparsity processor, performs a convolution operation required in the complementary deep neural network during inference, and skips backpropagation for an unnecessary weight and calculates a gradient only for a weight required to be learned during training.

The input memory 2112 stores input data used in an operation of the convolutional neural network.

The input loader 2113 loads input data required for each cycle in the convolutional neural network PE.

The weight memory 2114 stores weight data used in an operation of the convolutional neural network.

The weight loader 2115 loads weight data required for each cycle in the convolutional neural network PE.

The multiplier/accumulator 2116 performs a convolution operation by obtaining the product of a received weight and input and accumulating the product with a previously calculated result.

The operation skip controller 2117 controls the input load and the weight loader so that propagation for an unnecessary weight is skipped and a gradient may be calculated for a weight required to be learned during training.

A multiplier part of the multiplier/accumulator 2116 of the convolutional neural network core 2110 includes spatially arranged adders, and thus always operates regardless of the size of input.

The local gradient accumulator 1114b of the spiking neural network core 1110 repeats an operation of calculating a time difference with respect to output spikes in time order as many times as the number of input spikes to obtain gradients and accumulating the gradients.

A sparsity-energy efficiency graph 205 shows that the spiking neural network exhibits higher energy efficiency than that of the convolutional neural network when spike sparsity is 97.7% or more.

The top-level RISC controller 3000 has an instruction memory, a data memory, and an SIMD operator, and is responsible for controlling the spiking neural network processing module 1000 and the convolutional neural network processing module 2000 and for processing activation functions and batch normalization.

The neural network operation allocator 5000 calculates spike sparsity of a tile or layer in advance, estimates energy consumption of the convolutional neural network core 2110 and the spiking neural network core 1110, and then allocates an operation of the tile or layer to a core having low energy.

In the above description, for example, when input data is divided into regions corresponding to a horizontal length of 8 and a vertical length of 8, each region may be defined as the tile.

In addition, the deep neural network includes a plurality of layers, and the layer refers to one of the layers.

Referring to calculating the spike sparsity in advance, as mentioned above, the neural network operation allocator 5000 receives results from a neural network core where an operation is completed, and calculates the number of spikes generated when the corresponding values are converted into the spike domain using the characteristic that the number of spikes is proportional to the size of the value.

In addition, referring to estimating energy consumption of the convolutional neural network core 2110 and the spiking neural network core 1110, by measuring power consumed by the spiking neural network and the convolutional neural network according to spike frequency in advance, it is possible to obtain a formula for power consumption according to spike frequency. After the neural network operation allocator obtains a spike frequency, power of each corresponding core may be obtained by utilizing the obtained formula.

The core having low energy mentioned above refers to a core consuming less energy among the spiking neural network and the convolutional neural network.

A description will be given of a neural network operation allocation method, the attention module 4000, a detailed operation thereof of the complementary deep neural network accelerator having the heterogeneous convolutional neural network and the spiking neural network core architecture according to the present invention with reference to FIG. 2.

The attention module 4000 includes a maximum pooling unit 4100, an average pooling unit 4200, 8×2 multipliers & accumulators 4300, and a multiplier 4400 to reduce a spike generation frequency, and consequently generates an attention map to increase spike sparsity.

The attention module 4000 performs channel-wise pooling on input, then performs convolution using a pre-trained weight to obtain the attention map, and then multiplies the input to decrease a value of a meaningless region.

Furthermore, since an object is present only in a small part of an image in ImageNet, the attention module 4000 may reduce an input distribution as shown in an input size-data count graph 210 of FIG. 2. Thus, spike sparsity increases, and as shown in an example 211 of changing neural network core allocation due to attention, more operations are allocated to the low-power spiking neural network core 1110 without loss of accuracy.

The maximum pooling unit 4100 finds a largest value in data of several input channels present in each pixel direction for input, and eliminates other values except for the corresponding value from the input channels, thereby reducing the size of the input channels.

The average pooling unit 4200 finds an average value in data of several input channels present in each pixel direction for input, and eliminates other values except for the corresponding value from the input channels, thereby reducing the size of the input channels.

The multiplier & accumulator 4300 includes a multiplier and an accumulator, and performs a convolution operation by performing multiplication of weights and inputs and accumulating resultant values with previous result values using the multiplier and the accumulator.

The multiplier 4400 receives the weights and inputs, performs multiplication, and transfers result values to the accumulator.

The neural network operation allocator 5000 divides input into several tiles, calculates a frequency of spikes generated for each tile to estimate an operator (model) consuming less energy, and transfers the tiles to the operator so that an operation may be performed.

The global L2 cache 6000 stores weights required for neural network operations and transfers the corresponding weights to the convolutional neural network core 2110 or the spiking neural network core 1110 that requires specific weights.

ResNet-18, one of representative neural networks, exhibits average spike sparsity of 95.8% for ImageNet, and as shown in energy efficiency graph 212 for each neural network, it can be seen that the complementary deep neural network accelerator without the operation of the attention module 4000 may have energy efficiency increased by 43.3% compared to the spiking neural network and by 16.7% compared to the convolutional neural network.

Through an operation of the attention module 4000, the complementary deep neural network accelerator having the heterogeneous convolutional neural network and the spiking neural network core architecture according to the present invention may achieve spike sparsity of 97.9% for the same network and the same dataset and achieve higher energy efficiency by 85.8% compared to the spiking neural network and by 51.4% compared to the convolutional neural network.

As illustrated in FIG. 1, the plurality of spiking neural network PEs 1114 is arranged in a 64×64 array, and as illustrated in FIG. 3, the spiking neural network PEs 1114 are integrated and arranged while including a 4b×9 L1 cache 1114c having an accumulator and a register for weight reuse along a time axis.

Upon start of an operation of the spiking neural network, as illustrated in a weight reuse method 304, the spiking neural network PE 1114 imports weights for nine pre-synaptic neurons from the SRAM-based global L2 cache 6000 consuming large read operation power to the L1 cache 1114c consuming low read operation power.

Weights of the L1 cache 1114c are sequentially accumulated by input spikes (cycles 0 to 8), and then the adder tree & firing logic 1115 vertically accumulates operation results of the spiking neural network PEs 1114 to generate a neuron voltage. When a threshold value is exceeded, an output spike is generated.

In the spiking neural network PE 1114, after one more time step (cycle 9), weights stored in the L1 cache 1114c are reused for operations of the same pre-synaptic neurons without accessing the SRAM-based L2 cache 6000 consuming large read operation power, and as illustrated in a weight reuse method result 307, repetitive access to an SRAM-based memory is eliminated, so that a reuse rate increases by 3.3 to 5.5 times, and power of the spiking neural network core 1110 decreases by 42.2 to 49.1%.

In addition, the forward gradient-based sparsity generator 7000 having a comparator and a run-length encoder supports skip of a forward gradient-based operation for energy-efficient training of a deep neural network, receives a forward gradient from the local gradient accumulator 1114b of the spiking neural network PE 1114, and transfers a sparse operation flag length to a skip index register 2111a of the convolutional neural network PE 2111.

As illustrated in a convolutional neural network backpropagation process 313, the forward gradient-based sparsity generator 7000 obtains a forward gradient average value of synapses connected to a neuron, and instructs the convolutional neural network PE 2111 to skip error backpropagation for the neuron when the average is less than a threshold value.

In addition, as illustrated in a convolutional neural network gradient generation process 314, the forward gradient-based sparsity generator 7000 compares a threshold value for each synapse of the neuron with a forward gradient, and determines whether gradient generation for weight update of the convolutional neural network may be skipped.

The sparse operation flag length indicates an output address of the convolutional neural network PE 2111 that needs to be skipped through operation skip, thereby skipping input and weight importing, an output buffer 2111b does not receive an MAC result, and calculation of 58%/79% (backpropagation/gradient generation) and 31%/43% may be skipped for CIFAR-10 and an ImageNet dataset by skipping a forward gradient-based operation.

FIG. 4 illustrates a structure of the spiking neural network core 1110 in which the spike encoder 1111, the global counter 1116, the local gradient unit 1113, the LFSR 1112, and the local gradient accumulator 1114b are integrated, and a 2-step spike encoding process by the spike encoder 1111.

In the past, a rate encoding method was used to make the number of spikes proportional to the input size. To this end, a Poisson function was used, and a large number of counters were integrated to maintain a record of a spike generation time, which consumed a lot of power. However, the present invention proposes 2-step encoding that reduces the number of counters by 99.2%.

In 1-step encoding by the spike encoder 1111 according to the present invention, spikes may be generated only at a specific time unlike the existing method in which spikes may be generated at any time, a probability that a spike may be generated at the corresponding time point is proportional to a size (meaning a size of a data value input to each layer of the deep neural network), and several neurons generate spikes at the same time at the corresponding time point. Therefore, a single global counter may be shared to record a spike generation time.

In 2-step encoding by the spike encoder 1111 according to the present invention, a random bias generated by the LFSR 1112 is added to a spike train of each neuron generated in 1-step to compensate for randomness of rate encoding using the previous Poisson random function.

When one neuron fires after a synapse, each local gradient unit 1113 integrated in the spiking neural network core 1110 proposed in the present invention receives a bias and count from the global counter 1116 to calculate a time difference between an input spike and an output spike of the neuron, and converts the time difference into a forward gradient using a look-up table 1113a.

The forward gradient generated by the local gradient unit 1113 is shared by spiking neural network PEs 1114 in the same row among the spiking neural network PEs 1114 arranged in 64×64.

Only the local gradient accumulator 1114b activated by an AND logic of the input spike and the output spike of the neuron accumulates the forward gradient of each synapse, and after performing both inference and forward gradient generation in a first layer of the spiking neural network, the entire 2-step encoding is repeated to process the next layer of the spiking neural network.

As a result, the computational cost required for generating gradients was reduced by integrating the local gradient unit 1113 so that a large number of counters that were always running to record a time point when the existing input spike was fired are run only when both the global counter and the input/output spike are fired.

Specifically, as illustrated in FIG. 5, which is a performance graph, when inference and forward gradient generation are simultaneously processed, power of the spiking neural network core 1110 is reduced by up to 61%, and forward gradient-based operation sparsity generation by the sparsity generator 7000 increases deep neural network learning energy efficiency by 61.6% and 28.7% for CIFAR-10 and ImageNet, respectively, with accuracy loss of less than 0.5%.

Even though the technical idea of the present invention has been described above with reference to the attached drawings, this is merely an example of a preferred embodiment of the present invention and does not limit the present invention. In addition, it is a clear fact that anyone with ordinary knowledge in the technical field to which the present invention pertains may make various modifications and imitations within the scope of the technical idea of the present invention.

### [Description of reference numerals]

1: complementary deep neural network accelerator
1000: spiking neural network processing module
1100: spiking neural network cluster
1110: spiking neural network core
1111: spike encoder
1112: linear-feedback shift register (LFSR)
1113: local gradient unit
1113a: look-up table
1114: spiking neural network PE
1114a: accumulator-based inference unit
1114b: local gradient accumulator
1114c: L1 cache
1115: adder tree & firing logic
1116: global counter
2000: convolutional neural network processing module
2100: convolutional neural network cluster
2110: convolutional neural network core
2111: convolutional neural network PE
2112: input memory
2113: input loader
2114: weight memory
2115: weight loader
2116: multiplier & accumulator
3000: top-level RISC controller
4000: attention module
4100: maximum pooling unit
4200: average pooling unit
4300: multiplier & accumulator
4400: multiplier
5000: neural network operation allocator
6000: global L2 cache
7000: sparsity generator

## Claims

1. A complementary deep neural network accelerator having a heterogeneous convolutional neural network and a spiking neural network core architecture in which a spiking neural network processing module and a convolutional neural network processing module are combined, the complementary deep neural network accelerator comprising:
the spiking neural network processing module in an accumulator array configured to generate a voltage of a neuron by accumulating a weight of a synapse when a spike is generated;
the convolutional neural network processing module in a multiplier/accumulator array configured to accumulate a product of input and a weight of a neural network and generate an output value of the neuron;
a top-level RISC controller responsible for controlling the spiking neural network processing module and the convolutional neural network processing module, and processing an activation function and batch normalization;
an attention module configured to perform channel-wise pooling on the input, and then perform convolution using a pre-trained weight to generate an attention map; and
a neural network operation allocator configured to divide the input into several tiles, calculate a frequency of a spike generated for each tile to estimate a neural network processing module consuming less energy, and transfer a tile to the neural network processing module to allow an operation to be performed.

2. The complementary deep neural network accelerator according to claim 1, further comprising:
a global L2 cache configured to store a weight required for a neural network operation and transfer a weight required for a convolutional neural network core of the spiking neural network processing module or a spiking neural network core of the convolutional neural network processing module; and
a sparsity generator configured to obtain a forward gradient average value of a synapse connected to the neuron and cause a convolutional neural network PE of the convolutional neural network processing module to skip error backpropagation for the neuron when the average value is less than a threshold value.

3. The complementary deep neural network accelerator according to claim 1, wherein the spiking neural network processing module includes a plurality of spiking neural network clusters each including a plurality of spiking neural network cores and is assigned a spiking operation to perform the spiking operation.

4. The complementary deep neural network accelerator according to claim 3, wherein each of the spiking neural network cores comprises:
a spike encoder including a multiplexer and a counter and configured to receive data from an input memory and convert the input data into a spike pattern;
a linear-feedback shift register (LFSR) including a register and XOR logics and configured to generate a random value to determine a start point of a spike pattern when the spike encoder operates;
a local gradient unit including a subtractor and a lookup table and configured to obtain a time difference between an output spike and an input spike and convert the time difference into a gradient;
a spiking neural network PE including an inference logic configured to calculate a neuron potential by accumulating a weight when a spike is input from the spike encoder and a gradient accumulation logic configured to receive a gradient from the local gradient unit and accumulate the gradient;
an adder tree & firing logic configured to vertically accumulate operation results of spiking neural network PEs to generate neuron voltages and generate an output spike when a threshold value is exceeded; and
a global counter used to simultaneously obtain time differences between input spikes and output spikes.

5. The complementary deep neural network accelerator according to claim 4, wherein, L1 caches are integrated, and the spiking neural network PE imports a weight for a pre-synaptic neuron from the global L2 cache to an L1 cache consuming low read operation power, and reuses a weight stored in the L1 cache for operations of the same pre-synaptic neurons without accessing the global L2 cache after one time step.

6. The complementary deep neural network accelerator according to claim 1, wherein the convolutional neural network processing module includes a plurality of convolutional neural network clusters each including a plurality of convolutional neural network cores and is assigned a convolution operation to perform the convolution operation.

7. The complementary deep neural network accelerator according to claim 6, wherein each of the convolutional neural network cores comprises:
a convolutional neural network PE including a multiplier/accumulator and a sparsity processor, and configured to perform a convolution operation required in a complementary deep neural network during inference, and to skip backpropagation for an unnecessary weight and calculate a gradient exclusively for a weight required to be learned during training;
an input memory configured to store input data used in an operation of a convolutional neural network;
an input loader configured to load input data required for each cycle in the convolutional neural network PE;
a weight memory configured to store weight data used in an operation of the convolutional neural network;
a weight loader configured to load weight data required for each cycle in the convolutional neural network PE;
a multiplier/accumulator configured to perform a convolution operation by obtaining a product of a received weight and input and accumulating the product with a previously calculated result; and
an operation skip controller configured to control the input load and the weight loader so that propagation for an unnecessary weight is skipped and a gradient is allowed to be calculated for a weight required to be learned during training.

8. The complementary deep neural network accelerator according to claim 1, wherein the attention module comprises:
a maximum pooling unit configured to fine a largest value in data of a plurality of input channels present in each pixel direction for input, and eliminate other values except for the corresponding value from the input channels, thereby reducing a size of the input channels;
an average pooling unit configured to find an average value in data of a plurality of input channels present in each pixel direction for input, and eliminate other values except for the corresponding value from the input channels, thereby reducing a size of the input channels;
a multiplier & accumulator configured to perform a convolution operation by performing multiplication of a weight and input and accumulating a resultant value with a previous result value using a multiplier and an accumulator; and
a multiplier configured to receive a weight and input, perform multiplication, and transfer a result value to the accumulator.
